# EUROPÄISCHE PATENTSCHRIFT

(11) **EP 0 873 925 B1**
(45) Veröffentlichungstag und Bekanntmachung des Hinweises auf die Patenterteilung: **03.09.2003**
(21) Anmeldenummer: 98106670.7
(22) Anmeldetag: 11.04.1998
(51) Int. Cl.: B60T 10/02, B60T 1/087

(54) **Verfahren und Vorrichtung zur geregelten Begrenzung der Bremswirkung eines Retarders**
Method and apparatus for the controlled limitation of the braking action of a retarder
Procédé et dispositif pour limitation controllée de freinage d'un relantisseur

(30) Priorität: 23.04.1997 DE 19716922
(43) Veröffentlichungstag der Anmeldung: 28.10.1998
(73) Patentinhaber: Voith Turbo GmbH & Co. KG, 89522 Heidenheim (DE)
(72) Erfinder: Friedrich, Jürgen, 74564 Crailsheim (DE); Vogelsang, Klaus, 74564 Crailsheim (DE); Scherer, Roland, 74564 Crailsheim (DE); Gröner, Harald, 74564 Crailsheim (DE); Betz, Jürgen, 74589 Satteldorf (DE); Daum, Matthias, 74564 Crailsheim (DE); Adams, Werner, 74564 Crailsheim (DE)
(74) Vertreter: Dr. Weitzel & Partner

(56) Entgegenhaltungen:
- EP-A- 0 177 767
- EP-A- 0 716 966
- WO-A-94/27845
- DE-A- 4 136 759

## Beschreibung

Die Erfindung bezieht sich auf ein Verfahren zur geregelten Begrenzung der Bremswirkung eines Retarders gemäß den Merkmalen des Oberbegriffes des unabhängigen Anspruchs 1, sowie auf ein dazugehöriges Steuer-/Regelsystem zur geregelten Begrenzung der Bremswirkung eines Retarders gemäß den Merkmalen des Oberbegriffes des unabhängigen Anspruchs 6.

Bei Retardern besteht im Bremsbetrieb die Schwierigkeit, daß die vom Retarder erzeugte Wärme abgeführt werden muß, um eine Überhitzung und damit Zerstörung des Retarders auszuschließen.

Die während des Bremsvorgangs vom Retarder erzeugte Wärme kann mit Hilfe eines Kühlmediums eines Kühlsystems abgeführt und über einen Kühler eines Kühlsystems an die Umgebung abgegeben werden. In Fahrzeugen mit Verbrennungsmotor ist es vorteilhaft, als Kühlsystem für den Retarder das Motorkühlsystem des Fahrzeuges heranzuziehen. Hierbei muß dafür Sorge getragen werden, daß das Leistungsvermögen des Kühlsystems nicht überschritten wird und es beispielsweise zu Motorschäden wegen Überhitzung kommt.

Eine Möglichkeit eine Überhitzung des Motorkühlsystems zu verhindern besteht darin, die Temperatur im Kühlsystem ständig zu überwachen und bei Überschreiten einer vorgegebenen Temperatur das Bremsmoment des Retarders zu begrenzen bzw. einzustellen oder zu regeln. Für einen hydrodynamischen Retarder ist eine derartige Steuerung bzw. Regelung, die sicherstellt, daß es im Bremsbetrieb nicht zu einer Überschreitung der Temperatur im Motorkühlsystem kommt, aus ATZ, automobiltechnische Zeitschrift 95 (1993) S. 250- 255, "Der ZF-Intarder von Manfred Schwab, Wilhelm Härdtle, Karl-Fritz Heinzelmann" bekanntgeworden. Die Steuerung, die aus diesem Stand der Technik bekannt wurde, zeichnet sich dadurch aus, daß die Temperatur des Kühlwassers über einen Sensor ständig gemessen wird. Sobald der vorgegebene Maximalwert erreicht wird, reduziert die elektronische Steuerung automatisch das Bremsmoment, so daß dieser Wert nicht überschritten wird.

Die Gattungsbildende DE 41 36 759 A 1 zeigt einen hydrodynamischen Retarder in einem Kühlkreislauf. Mittels einesTemperatursensors wird die Temperatur des Arbeitsmediums im Arbeitskreislauf des Retarders erfasst. Der Temperaturwert des im Arbeitskreislauf befindlichen Arbeitsmediums wird mittels einer Regeleinrichtung eingeregelt. Dabei greift die Regeleinrichtung auf ein Regelventil zu, mittels dessen der Volumenstrom geregelt wird, welcher über eine Abfuhrleitung aus dem Arbeitsraum des Retarders abgeführt wird. Die Regeleinrichtung regelt die Arbeitsmediumtemperatur im Arbeitsraum des Retarders auf einen vorgegebenen Sollwert Dieser Sollwert ist derart gewählt, dass er einem bestimmten, gewünschten Bremsmoment entspricht. Dadurch kann erreicht werden, dass ein gewünschtes Bremsmoment zu jedem Zeitpunkt, auch zu Beginn des Bremsbetriebes, sauber einstellbar ist. Auch aus der WO 94/27845 ist für einen hydrodynamischen Retarder eine Steuerung bekanntgeworden, bei der das Bremsmoment bei Überschreiten einer vorgegebenen Kühlmitteltemperatur begrenzt wird. Nachteilig an all diesen aus dem Stand der Technik bekannten Regelsystemen ist, daß die Kühlleistung des Kühlsystems nicht optimal ausgenutzt werden kann, will man eine Überhitzung des Motorkühlsystems ausschließen.

Aufgabe der Erfindung ist es somit, ausgehend vom Stand der Technik ein Steuer- bzw. Regelsystem anzugeben, bei dem die Bremswirkung des Retarders mindestens als Funktion der Temperatur begrenzt wird, um so eine Überhitzung des Kühlsystems zu vermeiden und bei dem die Kühlleistung des Kühlsystems in optimaler Weise ausgenutzt wird.

Das Problem der Erfindung wird dadurch gelöst, daß eine geregelte Begrenzung der Bremswirkung mindestens nach Erreichen einer vorbestimmten Temperatur vorgenommen wird, wobei die vorbestimmte Temperatur, bei der die Regelung einsetzt, in Abhängigkeit vom zeitlichen Temperaturverlauf des Kühlmediums und/oder Arbeitsmediums des Retarders so gewählt wird, daß die Kühlleistung des Kühlsystems immer maximal ausgenutzt wird.

Erfindungsgemäß ist dies dann möglich, wenn der Verlauf der Kühlmittel- und/oder Arbeitsmediumtemperatur überwacht wird und in Abhängigkeit vom zeitlichen Anstieg oder Abfall derselben die vorbestimmte Temperatur, ab der die Regelung bzw. Steuerung einsetzt, gesetzt wird.

Besonders vorteilhaft ist es, wenn die vorbestimmte Temperatur, ab der die Regelung einsetzt, bei großen Temperaturgradienten zu niedrigeren Werten hin verschoben wird und bei sehr kleinen Temperaturgradienten zu höheren hin verschoben wird.

Neben dem Temperaturgradienten, der als Maß für das Einsetzen der Regelung herangezogen werden kann, ist es auch möglich, den vorbestimmten Temperaturwert, ab dem eine Begrenzung des Bremsmomentes vorgenommen wird, auch noch in Abhängigkeit weiterer Parameter zu setzen. So ist bekanntermaßen beispielsweise bei einer niedrigen Umgebungstemperatur die Kühlleistung eines Kühlsystems höher als bei hoher Umgebungstemperatur. Dies wiederum bedeutet, daß die vorbestimmte Temperatur, ab der die Regelung einsetzt, bei niedrigen Umgebungstemperaturen zu hohen Werten hin verschoben sein kann. Andere Größen, die die Lage der vorbestimmten Temperatur beeinflussen, können sein:
die Gehäusetemperatur des Retardergehäuses, die Stellung des Thermostaten im Kühlkreislauf, die ein Maß dafür ist, wieviel Kühlmittelmenge durch den Kühler und wieviel Kühlmittelmenge am Kühler vorbeigeführt wird, des Druckes im Kühlkreislauf, der kapazitiven Energieaufnahme der gesamten Kühlanlage, der Lüfterdrehzahl sowie der Wasserpumpendrehzahl.

Besonders bevorzugt, ohne hierauf jedoch beschränkt zu sein, ist es, wenn das erfindungsgemäße Regel- bzw. Steuerverfahren bei einem hydrodynamischen Retarder Anwendung findet. Gleichwohl ist das erfindungsgemäße Regelverfahren bzw. das erfindungsgemäße Steuerverfahren auch beispielsweise bei elektrischen Retardem, die aus busmagazin, Heft 8, August 1993, S. 36 - 39, "Fahrzeugkomponenten (Retarder), Mehr Sicherheit und fahrgastfreundlich", anwendbar.

Ebenso ist das erfindungsgemäße Regel- bzw. Steuerungsverfahren nicht alleine auf Motorkühlsysteme beschränkt, sondern für jedwedes Retarderkühlsystem anwendbar. Gleichwohl ist ein bevorzugter Anwendungsbereich derjenige, bei dem das Kühlsystem der Antriebsmaschine des Fahrzeuges zur Kühlung des Retarders mit herangezogen werden.

Neben dem erfindungsgemäßen Verfahren stellt die Erfindung auch ein Steuer-/Regelsystem zur geregelten Begrenzung der Bremswirkung eines Retarders gemäß Anspruch 6 zur Verfügung,

In der Steuer-/Regeleinheit kann ein Speicherbaustein vorgesehen sein, in dem der zeitliche Temperaturverlauf für einen zuvor festgelegten Zeitabschnitt abgespeichert wird. Hieraus können dann die Temperaturgradienten berechnet werden. In einer vereinfachten Ausführungsform ist es auch möglich, nur zwei Temperaturen in einem vorbestimmten Zeitintervall aufzunehmen und aus der sich hieraus ergebenden Temperaturdifferenz den Gradienten zu bestimmen. In Abhängigkeit vom Wert des Gradienten wird dann, wie beim Verfahren zuvor beschrieben, der vorbestimmte Temperaturwert, ab dem die Regelung einsetzt, gesetzt.

Zur Aufnahme des Temperaturwertes kann mit Vorteil ein im Kühl- und/oder Arbeitsmediumkreislauf an einer bestimmten Stelle angeordneter Temperatursensor, beispielsweise ein Widerstands-Temperaturfühler, wie er aus Lexikon Elektronik und Mikroelektronik, VDI-Verlag, S. 904 - 905, bekanntgeworden ist, eingesetzt werden.

Neben dem Temperatursensor, der unter anderem der Aufnahme der Temperatursignale zur Bestimmung des Temperaturgradienten dient, kann das System noch Sensoren zur weiteren Erfassung von die Kühlanlage beeinflussenden Parametern umfassen. In diesem Zusammenhang seien beispielsweise Sensoren zur Bestimmung der Umgebungstemperatur, der Gehäusetemperatur, des Druckes im Kühlsystem, der Lüfterdrehzahl sowie der Wasserpumpendrehzahl genannt.

Wie bereits zuvor ausgeführt, ist ein besonderes Einsatzgebiet der erfindungsgemäßen Steuerung die Regelung von hydrodynamischen Retardem. Gleichwohl ist die Erfindung hierauf nicht beschränkt, sondern umfaßt beispielsweise auch elektrische Retarder.

Generell kann das erfindungsgemäße Steuer-/Regelsystem sowohl bei Retardern Verwendung finden, deren Arbeitsmedium zugleich Kühlmedium ist. Ein derartiger Retarder ist beispielsweise in der DE-A-196 091 50 offenbart. Das erfindungsgemäße Steuer-/Regelsystem kann aber auch bei Retardem, deren Arbeitsmedium vom Kühlmedium getrennt ist, und bei denen die Wärmeabfuhr über einen Wärmetauscher in das Kühlmedium bewerkstelligt wird, Verwendung finden. Ein derartiger Retarder ist beispielsweise in dem zuvor beschriebenen Aufsatz in ATZ, Automobiltechnische Zeitschrift 95 (1993), auf S. 253, offenbart.

Die Erfindung soll nunmehr anhand der Zeichnungen beispielhaft beschrieben werden.

Es zeigen:
- Figur 1: eine Antriebseinheit mit einem Retarder, dessen Arbeitsmedium zugleich Kühlmedium ist, und der erfindungsgemäßen Steuer/Regeleinheit
- Figur 2: eine Antriebseinheit umfassend die erfindungsgemäße Steuer/Regeleinheit sowie einen Retarder, dessen Arbeitsmedium vom Kühlmedium getrennt ist
- Figur 3: das Temperaturverhalten des Kühlmediums in Abhängigkeit von dem vorbestimmten Temperaturwert, ab dem die Regelung einsetzt bei Regelung auf einen vorbestimmten maximalen Temperaturwert des Kühlmediums
- Figur 4: Verlauf des vorbestimmten Temperaturwertes, ab dem die Regelung einsetzt in Abhängigkeit vom Temperaturgradienten
- Figur 5: Verlauf des Retarderbremsmomentes in Abhängigkeit von der Kühlmitteltemperatur

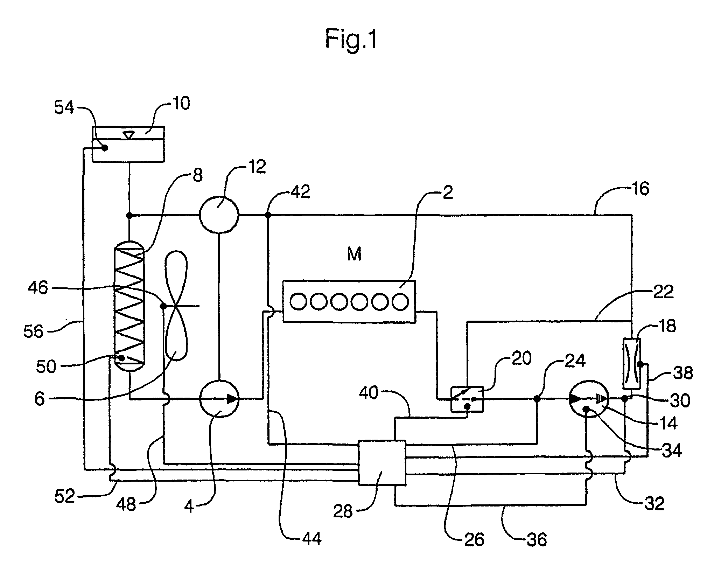

Figur 1 zeigt eine Antriebseinheit mit einem Motor 2, einer Pumpe 4 zur Förderung des Kühlmediums, einem Lüfter 6, einem Kühler 8, einem Überlaufbehälter 10, einem Thermostatventil 12 und einem Retarder 14. Der Retarder ist in den Motorkühlkreislauf 16 integriert und das Arbeitsmedium des Retarders ist damit zugleich Kühlmedium des Kühlkreislaufes. Das Retarderbremsmoment wird in vorliegendem Ausführungsbeispiel mit Hilfe einer Drossel 18, die in den Arbeitsmediumkreislauf eingebracht ist, eingestellt. Durch die Verengung wird im Retarder ein Gegendruck aufgebaut und somit ein Bremsmoment entwickelt. Im Bremsbetrieb kann der Durchflußquerschnitt in der Leitung mit Hilfe der Drossel stufenlos eingestellt werden. Eine derartige Einstellung eines Bremsmomentes mittels einer Drossel ist in der DE-A-44 08 349 offenbart.

Der Kühlkreislauf umfaßt des weiteren ein Umschaltventil 20, mit dem die Kühlflüssigkeit durch den Retarder 14 im Bremsbetrieb bzw. über die Bypassleitung 22 am Retarder vorbei geleitet werden kann. Der mindestens eine Temperatursensor, zur Ermittlung des aktuellen Temperaturwertes des Kühlmediums im Kühlkreislauf, ist mit der Bezugsziffer 42 bezeichnet und in vorliegendem Ausführungsbeispiel im Kühlkreislauf 16 dem Retarder nach und dem Kühler 8 vorangestellt. Das vom Temperatursensor 42 ermittelte Temperatursignal wird über Leitung 44 an die Steuer-/Regeleinheit 28 übemittelt. Überschreitet der mittels des Temperatursensors 42 bestimmte Temperaturwert einen vorgegebenen Temperaturwert, der in Abhängigkeit vom zeitlichen Verlauf der Temperatur des Kühlmediums gesetzt wird, so wird das Bremsmoment des Retarders 14 reduziert und zwar derart, daß der vorgegebene Temperaturmaximalwert des Kühlsystems nicht überschritten wird, d. h. bei dem der Erfindung zugrunde liegenden Regelverfahren ist vorzugsweise das Bremsmoment die Stellgröße und die Temperatur die Regelgröße. Betreffend der unterschiedlichen Typen von Reglern, die in vorliegendem Fall Verwendung finden können, wird auf Dubbel, Taschenbuch für den Maschinbau, 18. Auflage, Springer Verlag, Berlin - Heidelberg, 1996, S. X7 - X18 verwiesen.

Wie angegeben, können zur optimalen Ausnutzung der Kühlleistung des Kühlsystems auch andere Größen, wie beispielsweise die Umgebungstemperatur etc., für das Setzen des vorbestimmten Wertes, ab dem die Steuerung bzw. Regelung einsetzt, berücksichtigt werden, um eine optimale Ausnutzung der Kühlleistung des Kühlsystems zu gewährleisten. In diesem Zusammenhang wird auf den Umgebungstemperatursensor 50 und die diesem zugeordnete Signalleitung 52, dem Drucksensor 54 zur Bestimmung des Druckes im Kühlsystem mit zugeordneter Signalleitung 56 sowie die Sensoren 24 und 30 mit den zugeordneten Signalleitungen 32 und 36 zur Bestimmung der Temperaturdifferenz, die durch die Wärmeabgabe des Retarders verursacht wird, sowie den Sensor 34 zur Bestimmung des Retarderbremsmomentes mit zugeordneter Signalleitung 36 verwiesen. Mit Hilfe der Temperaturdifferenzmessung über die Sensoren 24 und 30 sowie der Messung des Retarderbremsmomentes über Sensor 34 ist es möglich, die aktuelle Kühlmitteldurchflußmenge im Kühlkreislauf als weitere Größe, die zur Regelung herangezogen werden kann, zu bestimmen. Wie bereits eingangs erwähnt, kann das Retarderbremsmoment in vorliegendem Ausführungsbeispiel über die Drossel 18 eingestellt werden. Die Ansteuerung der Drossel 18 erfolgt über Leitung 38. Wird die Kühlleistung des Kühlsystems, beispielsweise aufgrund einer niedrigen Pumpendrehzahl der Pumpe 4 und damit einer geringen Fördermenge von Kühlmittel vollständig für die Motorkühlung beansprucht, so muß der Regler des weiteren das Retarderbremsmoment auf Null reduzieren, um ein Überhitzen der Kühlanlage zu verhindern. In einem solchen Fall wird das Umschaltventil 20 über Leitung 40 angesteuert und das Kühlmedium, das in vorliegendem Ausführungsbeispiel zugleich Arbeitsmedium des Retarders ist, über Bypassleitung 22 am Retarder vorbeigeleitet.

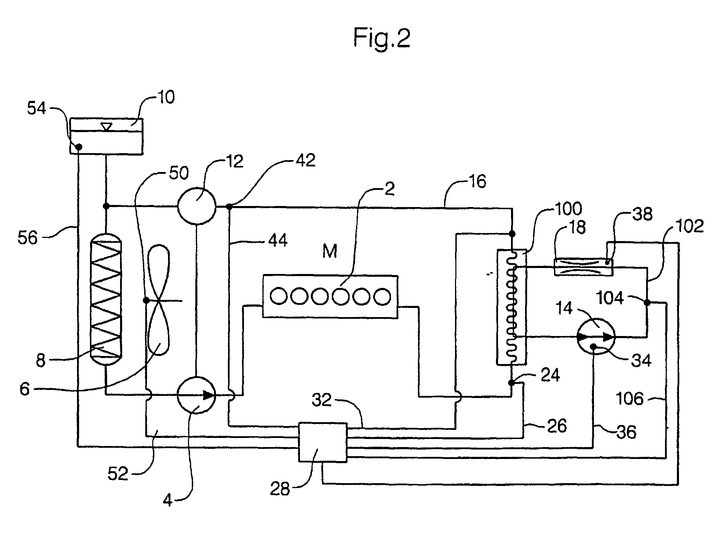

In Figur 2 ist eine Ausführungsform einer Antriebsmaschine dargestellt, bei der der Arbeitsmediumkreislauf 102 des Retarders 14 vom Kühlkreislauf 16 getrennt ist. Gleiche Aggregate wie in Figur 1 sind in Figur 2 mit denselben Bezugsziffern bezeichnet. Die Abführung der Wärme aus dem Kreislauf des Arbeitsmediums wird in Figur 2 über den Wärmetauscher 100 bewerkstelligt. Die Einstellung des Bremsmomentes des Retarders 14 erfolgt wiederum beispielsweise mit Hilfe einer Drossel 18. Bei der Ausführungsform gemäß Figur 2 wird die Temperatur im Kühlmedium über Temperatursensor 42 ermittelt und Leitung 44 der Steuer-/Regeleinheit 28 zugeführt, die entsprechend der Regelabweichung die Drossel 18 über Leitung 38 ansteuert, d. h. das Bremsmoment begrenzt. Zusätzlich zur Ausführungsform gemäß Figur 1 kann bei der Ausführungsform gemäß Figur 2 ein Temperatursensor 104 im Kreislauf 102 des Arbeitsmediums vorgesehen sein, der die Temperatur in diesem Kreislauf aufnimmt und über Leitung 106 an die Steuer/Regeleinheit übermittelt. Neben der Regelung auf eine bestimmte Kühlmitteltemperatur kann gemäß Figur 2 zusätzlich oder anstelle der Regelung der Kühlmitteltemperatur eine Regelung der Temperatur des Arbeitsmediums gemäß dem erfindungsgemäßen Verfahren vorgesehen sein. D. h. überschreitet der Temperaturgradient des Arbeitsmediums einen vorbestimmten Wert, so setzt eine Regelung bzw. Steuerung ein, die das Bremsmoment des Retarders reduziert, um eine Überhitzung des Arbeitsmediums zu verhindern. Eine derartige Steuerung bzw. Regelung kann analog zur Steuerung bzw. Regelung des Kühlkreislaufes 16 erfolgen.

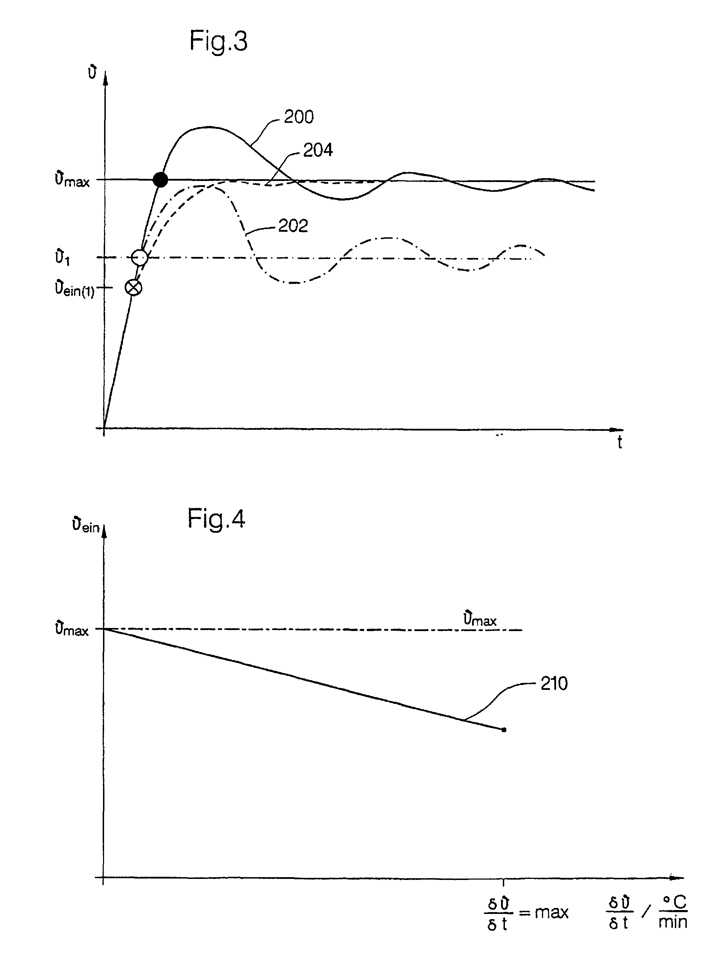

Figur 3 zeigt den zeitlichen Temperaturverlauf einer Regelung gemäß dem Stand der Technik sowie der erfindungsgemäßen Regelung.

Die Kurve 200 repräsentiert den zeitlichen Temperaturverlauf einer Regelung gemäß dem Stand der Technik. Diese Regelung setzt beim Erreichen des maximal zulässigen Temperaturwertes des Kühlsystems ein und regelt die Regelgröße Temperatur durch eine Veränderung des Bremsmomentes des Retarders als Stellgröße auf die vorgegebene Solltemperatur ϑₘₐₓ . Deutlich zu erkennen im Temperaturverlauf ist das Überschwingen der Regelung, das abhängig von der Regelkreisdämpfung (siehe Dubbel, Taschenbuch für den Maschinenbau, 18. Auflage, Berlin - Heidelberg, 1995) zu Beginn des Regelvorganges auftritt. Dieses Überschwingen der Regelung kann zu schweren Motorschädigungen bei sehr trägen, d. h. in der Sprache der Regelungstechnik wenig gedämpften Systemen, infolge einer Überhitzung führen.

Um eine derartige Schädigung zu verhindern, ist im allgemeinen vorgesehen, das die Regelung bereits bei einem Temperaturwert von ϑ₁ < ϑₘₐₓ einsetzt. Der sich bei einer derartigen Regelung auf den Temperaturwert ϑ₁ ergebende zeitliche Temperaturverlauf ist in Kurve 202 dargestellt. Wie aus Kurve 202 ersichtlich, wird durch eine derartige Regelung sichergestellt, daß der maximale Temperaturwert ϑₘₐₓ im zeitlichen Verlauf nicht überschritten und somit eine Überhitzung des Systems verhindert wird. Nachteilig an einer derartigen Regelung ist, daß das Bremsmoment im Gleichgewichtszustand stärker reduziert ist, als erforderlich, so daß die Kühlleistung des Kühlsystems nicht optimal ausgenutzt wird.

Der zeitliche Temperaturverlauf der erfindungsgemäßen Regelung ist in Kurve 204 dargestellt. Gemäß der Erfindung soll die Temperatur, bei der die Regelung einsetzt, in Abhängigkeit vom zeitlichen Temperaturverlauf, beispielsweise dem Temperaturgradienten δϑ / δt gesetzt werden. Durch die Aufnahme des Temperaturgradienten in die Regelung wird die Trägheit des Kühlsystems bei Einsetzen der Regelung berücksichtigt. So wird bei großen Temperaturgradienten das System immer träger als bei geringen Temperaturgradienten auf eine Änderung bzw. Regelung reagieren. In Konsequenz bedeutet dies, daß beispielsweise bei steil ansteigendem Temperaturverlauf die Regelung gemäß der Erfindung bei niedrigeren Temperaturwerten als bei nur langsam ansteigender Temperatur einsetzen muß.

Für die Regelung selbst sind unterschiedliche Konzepte denkbar. Als Regelgröße dient in dem nachfolgend vorgestellten beispielhaften Regelverfahren wiederum die Temperatur, als Stellwert wiederum das Retarderbremsmoment.

In einer ersten Ausführungsform einer Regelung kann wiederum auf einen fest vorgegebenen Temperaturwert ϑ < ϑₘₐₓ geregelt werden. Dieser festgesetzte Temperatursollwert wird in Abhängigkeit vom Temperaturgradienten gewählt und muß nicht identisch mit dem vorgegebenen Temperaturwert ϑ₁ sein, zudem die Regelung einsetzt. Im allgemeinen wird der Temperatursollwert, auf den geregelt wird, umso näher bei ϑₘₐₓ liegen, je geringer der Temperaturanstieg, d. h. der Temperaturgradient ist.

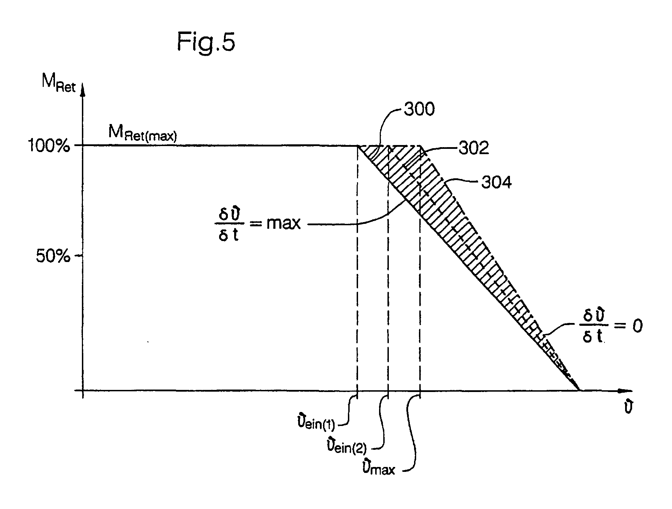

Eine andere Möglichkeit einer Regelung bestünde darin, stets auf den maximalen Temperaturwert ϑₘₐₓ des Kühlsystems zu regeln und zwar unter Berücksichtigung des Temperaturgradienten δϑ / δt. Dies kann beispielsweise dadurch geschehen, daß für die Stellgröße eine Kennlinienschar in Abhängigkeit vom Temperaturgradienten hinterlegt ist, so daß die Stellgröße "Retarderbremsmoment" sowohl eine Funktion der Temperatur des Kühlmediums, wie auch des zeitlichen Temperaturverlaufs, d. h. des Temperaturgradienten, des Kühlmediums ist. In diesem Zusammenhang wird auf Fig. 5 und die hierzu gegebenen Erläuterungen verwiesen.

Der zeitliche Verlauf der Temperatur des Kühlmediums bei einer derartigen Regelung ist in Figur 3 mit der Bezugsziffer 204 gezeigt. Die Regelung setzt bei ϑ = ϑₑᵢₙ(1) in Abhängigkeit vom Verlauf des Temperaturgradienten ein. Wie aus dem Verlauf der Kurve 204 zu erkennen, ist eine derartige Regelung dadurch ausgezeichnet, daß ein Überschwingen wie im Stand der Technik gemäß dem Kurven 200 bzw. 202 vermieden wird und durch das geregelte Heranführen an die maximal zulässige Temperatur ϑₘₐₓ des Kühlsystems, dessen Kühlleistung optimal ausgenutzt wird.

In Figur 4 ist beispielhaft der Verlauf der vorbestimmten Temperatur ϑₑᵢₙ, zu der die Regelung einsetzt, in Abhängigkeit vom Temperaturgradienten δϑ / δt mit der Bezugsziffer 210 dargestellt. Im vorliegenden Fall ist der Verlauf linear gewählt, selbstverständlich kann der Fachmann im Rahmen von Optimierungen auch einen anderen Verlauf der Abhängigkeit der Temperatur ϑₑᵢₙ, zu der die Regelung einsetzt, in Abhängigkeit vom Temperaturgradienten wählen. Wie Figur 4 gut zu entnehmen ist, nimmt die vorbestimmte Temperatur ϑₑᵢₙ, zu der die Regelung einsetzt, mit steigendem Temperaturgradienten ab, d. h. die Regelung setzt bei steil ansteigendem Temperaturverlauf bereits sehr früh ein.

In Figur 5 ist beispielhaft der Verlauf der Stellgröße Retarderbremsmoment M_{Ret} in Abhängigkeit von der Regelgröße Temperatur ϑ dargestellt.

Wie Fig. 5 zu entnehmen ist, wird bis zu einer Temperatur ϑₑᵢₙ(1), das ist die Temperatur, bei der die Regelung für den größen angenommenen Temperaturanstieg bzw. Temperaturgradienten δϑ / δt einsetzt, keine Begrenzung des Retarderbremsmomentes vorgenommen. Es liegt das maximale Retarderbremsmoment M_{Ret}(max) an, da die gesamte während des Bremsvorganges vom Retarder entwickelte Wärme vom Kühlsystem abgeführt werden kann. Wird nun vom Temperatursensor der Regeleinrichtung eine Temperatur größer ϑₑᵢₙ(1) registriert, so wird das Bremsmoment entlang der Kennlinie 300 auf den bei dieser Temperatur vorgesehene Bremsmomentwert reduziert, beispielsweise 80 % M_{Ret}(max). Fällt nun aufgrund der geringeren, von der Retarderbremse abgegebenen Wärmemenge die Temperatur unterhalb eines Wertes ϑₑᵢₙ(1), so wird die Regelung wieder das maximale Retarderbremsmoment zulassen. Erfolgt der Temperaturanstieg nunmehr langsamer, d. h. δϑ / δt ist kleiner als δϑ / δt = max, so setzt die Regelung beispielsweise erst zu dem Zeitpunkt ϑₑᵢₙ(2) ein, und der Bremsmomentwert wird entsprechend dem Verlauf der Kurve 302 bei steigender Temperatur reduziert. Wie Figur 5 zu entnehmen ist, werden bei langsamer ansteigendem Gradienten bei gleicher Temperatur der Stellgröße Bremsmoment höhere Werte zugeordnet.

Ist der Temperaturgradient identisch = Null, d. h. liegt ein stationärer Zustand mit δϑ / δt = 0 vor, so wird die Kurve 304 in Figur 5 erreicht, die wie die Kurven bzw. Kennlinien 300 und 302 den Verlauf der Stellgröße Bremsmoment in Abhängigkeit von der Kühlmitteltemperatur darstellen, wenn ϑ > ϑₘₐₓ ist. Wird im stationären Fall aufgrund eines kurzfristigen Anstieges die Temperatur ϑₘₐₓ im Kühlsystem überschritten, so wird das Bremsmoment entsprechend der Kennlinie 304 reduziert, um ein Überhitzen des Kühlmittels zu verhindern. Dieser Fall stellt somit derjenige dar, bei dem die Kühlleistung des Kühlsystems optimal ausgenutzt wird.

In einer vereinfachten Ausführungsform der Erfindung kann anstelle einer Regelung, bei der die Regelgröße, in vorliegendem Beispielen die Temperatur, fortlaufend erfaßt, mit der Führungsgröße bzw. dem Sollwert, vorliegend beispielsweise der maximalen Temperatur ϑₘₐₓ, verglichen und abhängig von diesem Vergleich über entsprechende Änderung der Stellgröße, in vorliegendem Beispiel das Retarderbremsmoment, im Sinne einer Angleichung an die Führungsgröße angepaßt wird (siehe hierzu Dubbel, Taschenbuch für den Maschinenbau, 18. Auflage, Berlin 1996, S. X1 - X2), lediglich eine Steuerung vorgesehen sein.

Bei einer Steuerung beeinflussen ein oder mehrere Eingangsgrößen die Ausgangsgröße aufgrund einer Gesetzmäßigkeit (siehe hierzu Dubbel aaO, S. X1 - X2). Vorliegend wäre die nachfolgende Steuerung ohne Beschränkung hierauf denkbar.

So könnte bei einer bestimmten Temperatur und bei einem bestimmten Temperaturgradienten bei Überschreitung einer in Abhängigkeit vom Temperaturgradienten vorbestimmten Temperatur ϑₑᵢₙ das Bremsmoment entsprechend der in Figur 5 dargestellten Kennlinie reduziert werden. Eine derartige Steuerung würde das Bremsmoment gerade nur so stark reduzieren, daß bei dem vorliegendem Temperaturgradienten ein Überschwingen verhindert und somit eine Schädigung des Kühlsystems vermieden wird. Somit wird wiederum die Kühlleisutng des Kühlsystems optimal ausgenutzt.

In der Erfindung wird somit erstmals ein Verfahren und eine Vorrichtung zur Verfügung gestellt, die es erlaubt, die Bremswirkung eines Retarders geregelt bzw. gesteuert genau derart zu begrenzen, daß die Kühlleistung des Kühlsystems maximal ausgenützt wird, wobei sichergestellt ist, daß es zu keiner Überhitzung im Kühlsystem und damit zu einer Schädigung desselben bzw. der gekühlten Komponenten kommt.

## Patentansprüche

1. Verfahren zur geregelten Begrenzung der Bremswirkung eines Retarders (14), bei dem die während des Bremsens erzeugte Wärme mit Hilfe eines Kühlmittels eines Kühlsystems (16) abgeführt wird, wobei die geregelte Begrenzung der Bremswirkung mindestens nach Erreichen einer vorbestimmten Temperatur (ϑ_{EIN}) einsetzt, wobei
die vorbestimmte Temperatur (ϑ_{EIN}) in Abhängigkeit vom zeitlichen Temperaturverlauf des Kühlmediums (204) und/oder Arbeitsmediums des Retarders (14) so gewählt wird, daß die Kühlleistung des Kühlsystems (16) maximal ausgenutzt wird, **dadurch gekennzeichnet. daß** in Abhängigkeit vom Anstieg oder Abfall (δϑ/δt) der Kühlmittel- und/oder Arbeitsmediumtemperatur die vorbestimmte Temperatur (ϑ_{EIN}) gesetzt wird.

2. Verfahren gemäß Anspruch 1,
**dadurch gekennzeichnet, daß** die vorbestimmte Temperatur (ϑ_{EIN}) mit größerem Temperaturgradienten (δϑ/δt) des Kühlmittels und /oder Arbeitsmediums abnimmt und mit größer werdendem Temperaturgradienten (δϑ/ϑt) des Kühlmittels und/oder Arbeitsmediums zunimmt.

3. Verfahren nach einem der Ansprüche 1 bis 2,
**dadurch gekennzeichnet, daß** die vorbestimmte Temperatur (ϑ_{EIN}) des weiteren eine Funktion mindestens einer der nachfolgenden Größen ist der Umgebungstemperatur, der Gehäusetemperatur, der Stellung des Thermostaten im Kühlkreislauf, des Druckes im Kühlkreislauf, der kapazitiven Energieaufnahme der gesamten Kühlanlage, der Lüfterdrehzahl und der Wasserpumpendrehzahl.

4. Verfahren nach einem der Ansprüche 1 bis 3,
**dadurch gekennzeichnet, daß**
der Retarder (14) ein hydrodynamischer Retarder ist.

5. Verfahren nach einem der Ansprüche 1 bis 4,
**dadurch gekennzeichnet, daß**
das Kühlsystem (16) das Motorkühlsystem ist.

6. Steuer-/Regelsystem zur geregelten Begrenzung der Bremswirkung
eines Retarders (14) umfassend:
Mittel (42) zur Erfassung der Temperatur des Kühl- und/oder
Arbeitsmediums des Retarders (14)
Mittel (34) zur Erfassung der Retarderbremsleistung
eine Steuer-/Regeleinheit (28), wobei
die Steuer-/Regeleinheit (28) die Retarderbremsleistung bei Überschreiten einer vorbestimmten Temperatur (ϑ_{EIN}) des Kühl- und/oder Arbeitsmediums begrenzt, wobei die vorbestimmte Temperatur (ϑ_{EIN}) in Abhängigkeit vom zeitlichen Temperaturverlauf (204) so gewählt wird, daß die Kühlleistung des Kühlsystems (16) maximal ausgenutzt wird, **dadurch gekennzeichnet daß** in Abhängigkeit vom Anstieg oder Abfall der Kühlmittel- und/oder Arbeitsmediumtemperatur die vorbestimmte Temperatur gesetzt wird.

7. Steuer-/Regelsystem gemäß Anspruch 6,
**dadurch gekennzeichnet, daß**
die Steuer-/Regeleinheit (28) einen Speicher umfasst, in dem der zeitliche Temperaturtverlauf (204) für einen vorherbestimmten Zeitabschnitt abgespeichert wird.

8. Steuer-/Regelsystem gemäß einem der Ansprüche 6 oder 7,
**dadurch gekennzeichnet, daß**
das System mindestens einen im Kühl- und/oder Arbeitsmediumkreislauf angeordneten Temperatursensor (42) umfasst, der die Kühl- und/oder Arbeitsmediumtemperatur kontinuierlich oder in gewissen, vorherbestimmten Zeitabständen aufnimmt.

9. Steuer-/Regelsystem gemäß einem der Ansprüche 6 bis 8,
**dadurch gekennzeichnet, daß**
das System mindestens einen der nachfolgenden Sensoren umfasst:
Sensoren zur Bestimmung der Umgebungstemperatur,
Sensoren zur Bestimmung der Gehäusetemperatur
Sensoren zur Bestimmung des Druckes im Kühlsystem
Sensoren zur Bestimmung der Lüfterdrehzahl
sowie
Sensoren zur Bestimmung der Wasserpumpendrehzahl

10. Steuer-/Regelsystem gemäß einem der Ansprüche 6 bis 9,
**dadurch gekennzeichnet, daß**
der Retarder (14) ein hydrodynamischer Retarder ist.

11. Steuer-/Regelsystem gemäß Anspruch 10,
**dadurch gekennzeichnet, daß**
das Arbeitsmedium des Retarders (14) zugleich Kühlmedium ist.

12. Steuer-/Regelsystem gemäß Anspruch 10,
**dadurch gekennzeichnet, daß**
das Arbeitsmedium des Reatrders (14) getrennt vom Kühlmedium ist.

## Claims

1. A method and apparatus for the controlled limitation of the braking action of a retarder (14), in which the heat produced during the braking is carried off by means of a coolant of a cooling system (16), with the controlled limitation of the braking action setting in at least after reaching a predetermined temperature (∂ₒₙ), with the predetermined temperature (∂ₒₙ) being chosen depending on the temperature progress over time of the cooling medium (204) and/or the working medium of the retarder (14), such that the cooling performance of the cooling system (16) is exploited to the maximum extent, **characterized in that** depending on the rise or fall (δ∂/δt) of the coolant and/or working medium temperature the predetermined temperature (∂ₒₙ) is used.

2. A method as claimed in claim 1, **characterized in that** the predetermined temperature (∂ₒₙ) decreases with higher temperature gradient (δ∂/δt) of the coolant and/or working medium and increases with increasing temperature gradient (δ∂/∂t) of the coolant and/or working medium.

3. A method as claimed in one of the claims 1 to 2, **characterized in that** the predetermined temperature (∂ₒₙ) is further a function of at least one of the following variables: the ambient temperature, the housing temperature, the position of the thermostat in the coolant circulation, the pressure in the coolant circulation, the capacitive power consumption of the entire cooling system, the fan speed and the water pump speed.

4. A method as claimed in one of the claims 1 to 3, **characterized in that** the retarder (14) is a hydrodynamic retarder.

5. A method as claimed in one of the claims 1 to 4, **characterized in that** the cooling system (16) is the engine cooling system.

6. An open-loop/closed-loop control system for the controlled limitation of the braking action of a retarder (14), comprising:
- means (42) for detecting the temperature of the cooling and/or working medium of the retarder (14);
- means (34) for detecting the retarder braking output;
- an open-loop/closed-loop control unit (28), with
- the open-loop/closed-loop control unit (28) limiting the retarder braking output on exceeding a predetermined temperature (∂ₒₙ) of the cooling and/or working medium, with the predetermined temperature (∂ₒₙ) being chosen depending on the progress of the temperature over time in such a way that the cooling output of the cooling system (16) is utilized to the maximum extent, **characterized in that** the predetermined temperature is set depending on the rise or fall of the coolant and/or working medium temperature.

7. An open-loop/closed-loop control system as claimed in claim 6, **characterized in that** the open-loop/closed-loop control system (28) comprises a memory in which the progress of the temperature over time (204) is stored for a predetermined time interval.

8. An open-loop/closed-loop control system as claimed in one of the claims 6 or 7, **characterized in that** the system comprises at least one temperature sensor (42) arranged in the cooling medium and/or working medium circulation, which sensor detects the cooling medium and/or working medium temperature continuously or in certain predetermined intervals.

9. An open-loop/closed-loop control system as claimed in one of the claims 6 to 8, **characterized in that** the system comprises at least one of the following sensors:
- sensors for determining the ambient temperature;
- sensors for determining the housing temperature;
- sensors for determining the pressure in the cooling system;
- sensors for determining the fan speed, and
- sensors for determining the water pump speed.

10. An open-loop/closed-loop control system as claimed in one of the claims 6 to 9, **characterized in that** the retarder (14) is a hydrodynamic retarder.

11. An open-loop/closed-loop control system as claimed in claim 10, **characterized in that** the working medium of the retarder (14) is simultaneously the cooling medium.

12. An open-loop/closed-loop control system as claimed in claim 10, **characterized in that** the working medium of the retarder (14) is separated from the cooling medium.

## Revendications

1. Procédé de limitation contrôlée de l'action de freinage d'un ralentisseur (14) dans lequel la chaleur produite pendant le freinage est évacuée à l'aide d'un agent refroidisseur d'un système de refroidissement (16), la limitation contrôlée de l'action de freinage commençant au moins une fois une température prédéterminée (υ_{EIN}) atteinte, la température prédéterminée (υ_{EIN}) étant choisie en fonction de la variation dans le temps de la température de l'agent refroidisseur (204) et/ou du fluide de travail du ralentisseur (14) de sorte que la puissance de refroidissement du système de refroidissement (16) soit exploitée au maximum,
**caractérisé en ce que**
la température prédéterminée (υ_{EIN}) est appliquée en fonction de l'élévation ou de la chute (δν/δt) de la température de l'agent refroidisseur et/ou du fluide de travail.

2. Procédé selon la revendication 1,
**caractérisé en ce que**
la température prédéterminée (υEIN) diminue pour un gradient de température (δυ/δt) plus important de l'agent refroidisseur et/ou du fluide de travail et augmente lorsque le gradient de température (δν/δt) de l'agent refroidisseur et/ou du fluide de travail devient plus élevé.

3. Procédé selon l'une des revendications 1 et 2,
**caractérisé en ce que**
la température prédéterminée (υEIN) est en outre fonction d'au moins une des grandeurs suivantes :
- température ambiante,
- température du carter,
- position du thermostat dans le circuit de refroidissement,
- pression dans le circuit de refroidissement,
- capacité d'absorption d'énergie de l'ensemble de l'installation de refroidissement,
- vitesse de rotation du ventilateur et vitesse de rotation de la pompe à eau.

4. Procédé selon l'une des revendications 1 à 3,
**caractérisé en ce que**
le ralentisseur (14) est un ralentisseur hydrodynamique.

5. Procédé selon l'une des revendications 1 à 4,
**caractérisé en ce que**
le système de refroidissement (16) est le système de refroidissement du moteur.

6. Système de commande et de réglage pour la limitation contrôlée de l'action de freinage d'un ralentisseur (14) comprenant :
- des moyens (42) pour saisir la température de l'agent refroidisseur et/ou du fluide de travail du ralentisseur (14)
- - des moyens (34) pour saisir la puissance de freinage du ralentisseur
- - une unité de commande et de réglage (28) dans laquelle l'unité de commande et de réglage (28) limite la puissance de freinage du ralentisseur en cas de dépassement d'une température prédéterminée(υEIN) de l'agent refroidisseur et/ou du fluide de travail,
la température prédéterminée (υEIN) étant choisie en fonction d'une variation de la température dans le temps (204), de sorte que la puissance de refroidissement du système de refroidissement (16) est exploitée au maximum, **caractérisé en ce que** la température prédéterminée est appliquée en fonction de l'élévation ou de la chute de la température de l'agent refroidisseur et/ou du fluide de travail.

7. Système de commande et de réglage selon la revendication 6,
**caractérisé en ce que**
l'unité de commande et de réglage (28) comprend une mémoire dans laquelle la variation dans le temps de la température (204) est mémorisée pour une période de temps, déterminée au préalable.

8. Système de commande et de réglage selon l'une des revendications 6 et 7,
**caractérisé en ce que**
le système comprend au moins un capteur de température (42) placé dans le circuit de l'agent refroidisseur et/ou du fluide de travail, qui enregistre la température de l'agent refroidisseur et/ou du fluide de travail de manière continue ou à des intervalles de temps déterminés au préalable.

9. Système de commande et de réglage selon l'une des revendications 6 à 8,
**caractérisé en ce que** le système comprend au moins un des capteurs suivants :
- capteurs de détermination de la température ambiante,
- capteurs de détermination de la température du carter,
- capteurs de détermination de la pression dans le système de refroidissement,
- capteurs de détermination de la vitesse de rotation du ventilateur, ainsi que
- capteurs de détermination de la vitesse de rotation de la pompe à eau.

10. Système de commande et de réglage selon l'une des revendications 6 à 9,
**caractérisé en ce que**
le ralentisseur (14) est un ralentisseur hydrodynamique.

11. Système de commande et de réglage selon la revendication 10,
**caractérisé en ce que**
le fluide de travail du ralentisseur (14) est en même temps l'agent refroidisseur.

12. Système de commande et de réglage selon la revendication 10,
**caractérisé en ce que**
le fluide de travail du ralentisseur (14) est séparé de l'agent refroidisseur.
